# EUROPÄISCHE PATENTANMELDUNG

(11) **EP 0 987 909 A2**
(43) Veröffentlichungstag der Anmeldung: **22.03.2000**
(21) Anmeldenummer: 99118401.1
(22) Anmeldetag: 16.09.1999
(51) Int. Cl.: H04Q 3/66, H04Q 3/62

(54) **Verfahren zum Konfigurieren einer Leitweglenkungstabelle in einer Nebenstellenanlage**

(30) Priorität: 18.09.1998 DE 19842850
(71) Anmelder: SIEMENS AKTIENGESELLSCHAFT, 80333 München (DE)
(72) Erfinder: Römer, Wilfried, 10713 Berlin (DE)

(57) **Zusammenfassung**

Beschrieben wird ein Verfahren zum Konfigurieren einer Nebenstellenanlage (10) in einem Privatnetz(P). Der Nebenstellenanlage (10) werden die möglichen Wege vorgegeben, um Telefonverbindungen von Teilnehmern des Privatnetzes zu Teilnehmern des öffentlichen Telefonnetzes herzustellen. Ein Rufnummernplan (R) enthält Datenzeilen (zi), die die Wege definieren. Dieser Rufnummernplan (R) wird in mehreren Bearbeitungsphasen so aufbereitet, daß die Nebenstellenanlage von den zum Zeitpunkt der Verbindungsanfrage verfügbaren Wegen den Weg auswählt, bei dem der Amtsausstieg zum günstigsten Tarif erfolgt.

## Beschreibung

Die Erfindung betrifft ein Verfahren zur Konfiguration von Nebenstellenanlagen in einem Privatnetz.

Die Nebenstellenanlagen an verschiedenen Standorten eines Unternehmens werden häufig über Festverbindungen miteinander zu einem Privatnetz verbunden. Dies ermöglicht es den Teilnehmern innerhalb des Privatnetzes miteinander z.B. Telefongespräche zu führen, ohne daß für ein einzelnes Gespräch Gebühren an einen Betreiber eines öffentlichen Telefonnetzes zu entrichten sind.

Mit einem solchen Privatnetz lassen sich jedoch auch die Kosten für Amtsgespräche, d.h. Gespräche zu Teilnehmern im öffentlichen Telefonnetz, senken, indem das Gespräch zu einem großen Teil über das Privatnetz übertragen wird. Dieses Leistungsmerkmal des Privatnetzes wird auch als "Wegewahl zu minimalen Kosten" bzw. "Least Cost Routing", kurz LCR, bezeichnet. Um diese Betriebsart zu erreichen, werden die Gespräche so weit wie möglich im Privatnetz übertragen und erst in nächster Nähe zum Zielort über das öffentliche Telefonnetz geführt. Dieses Verfahren ist an sich bekannt und wird auch als "Central Office Break-Out" bezeichnet.

Die Nebenstellenanlagen führen die Wegewahl unabhängig voneinander durch. Daher werden jeder Nebenstellenanlage die möglichen Wege vorgegeben, um eine Telefonverbindung zu einem Teilnehmer im öffentlichen Telefonnetz herzustellen. Die Wegewahl erfolgt statisch, d.h. der Weg, über den eine Telefonverbindung hergestellt wird, hängt von der Verfügbarkeit der Wege zum Zeitpunkt der Verbindungsanfrage ab.

Für jede Nebenstellenanlage wird ein Rufnummernplan erstellt, der für jeden möglichen Weg zu einem Zielort eine Datenzeile enthält, die diesen Weg definiert. Dieser Rufnummernplan ist bei der Konfiguration der Nebenstellenanlage so aufzubereiten, daß sie von den zum Zeitpunkt der Verbindungsanfrage verfügbaren Wegen den Weg auswählt, bei dem der Amtsausstieg zum jeweils günstigsten Tarif erfolgt.

Beim Stand der Technik erfolgt die Bearbeitung des Rufnummernplans manuell. Diese Vorgehensweise ist sehr kostspielig und zeitaufwendig, da solche Rufnummernpläne aus sehr vielen, z.B. mehr als 1000 Datenzeilen bestehen können. Zudem ist diese Vorgehensweise fehleranfällig.

Aufgabe der Erfindung ist es, ein Verfahren zur Optimierung von Rufnummernplänen bereitzustellen, das mit geringem Aufwand und hoher Effizienz arbeitet.

Die Erfindung löst die Aufgabe durch die Merkmale des Patentanspruches 1. Vorteilhafte Weiterentwicklungen sind in den Unteransprüchen angegeben.

Gemäß der Erfindung wird jeder Nebenstellenanlage ein Rufnummernplan zugeordnet, der aus Datenzeilen besteht, die die Verbindungswege zwischen der Nebenstellenanlage und einem Teilnehmer im öffentlichen Telefonnetz definieren. Die Datenzeilen enthalten u.a. ein Wählmuster für den Verbindungsweg, eine Telefongebühr-Kenngröße mit einem Telefontarif, eine Bezeichnung einer Verbindungsleitung, über die die Nebenstellenanlage das Telefongespräch an eine weitere Nebenstellenanlage des Privatnetzes oder an das öffentliche Telefonnetz weiterleitet, und eine Prioritätskennzahl. Mit der Prioritätskennzahl wird eine Rangfolge für Datenzeilen mit gleichem Wählmuster und gleichem Wert der Telefongebühr-Kenngröße festgelegt.

In einem iteraktiven Datenverarbeitungsprozeß wird geprüft, ob zu einer Datenzeile eine weitere Datenzeile mit gleichem Wählmuster und gleicher Leitungs-Kenngröße im Rufnummernplan existiert. Ist dies der Fall, wird von den beiden Datenzeilen diejenige Datenzeile mit dem größerem Tarifwert aus dem Rufnummernplan entfernt. Haben beide Datenzeilen den gleichen Tarifwert, wird die Datenzeile mit der größeren Prioritätskennzahl aus dem Rufnummernplan entfernt.

Nach Abschluß dieses iteraktiven Datenverarbeitungsprozesses, der, z.B. in einer ersten Bearbeitungsphase durchgeführt wird, enthält der Rufnummernplan für jede Kombination aus Wählmuster und Leitungs-Kenngröße maximal eine Datenzeile. Diese Datenzeile hat von allen Datenzeilen mit gleicher Kombination aus Wählmuster und Leitungs-Kenngröße, die vor der erfindungsgemäßen Bearbeitung im Rufnummernplan vorhanden waren, den niedrigsten Tarifwert.

Es ist sinnvoll, ein Gespräch nur dann über das Privatnetz weiterzuleiten, wenn die bei diesem Weg anfallenden Telefongebühren günstiger sind, als bei einer direkten Übergabe des Gesprächs an das öffentliche Telefonnetz. Damit werden die Verbindungsleitungen des Privatnetzes nur für solche Gespräche beansprucht, bei denen eine Verringerung der Telefongebühren erreicht wird.

Hierzu wird in einer zweiten Bearbeitungsphase gemäß Anspruch 2 für ein Wählmuster zunächst der Tarifwert derjenigen Datenzeile bestimmt, die einen Weg definiert, bei dem das Telefongespräch direkt an das öffentliche Telefonnetz übergeben wird. Existieren zu diesem Wählmuster mehrere solcher Datenzeilen, werden diese nach dem höchsten Tarifwert durchsucht. Anschließend werden alle Datenzeilen mit diesem Wählmuster aus dem Rufnummernplan entfernt, die Wege über das Privatnetz definieren und die einen gleichen oder einen höheren Tarifwert aufweisen.

Es ist vorteilhaft, das erfindungsgemäße Verfahren um eine dritte Bearbeitungsphase zu erweitern, wie sie im Anspruch 3 definiert ist. In dieser dritten Bearbeitungsphase werden Datenzeilen mit gleichem Wählmuster zusammengestellt und sortiert. Die Datenzeilen können z.B. so in Gruppen angeordnet werden, daß aufeinander folgende Datenzeilen aufsteigende Werte der Telefongebühr-Kenngröße haben und aufeinander folgende Datenzeilen mit gleichem Wert der Telefongebühr-Kenngröße aufsteigende Werte der Prioritätskennzahl haben.

Bei der Gesprächsvermittlung gemäß der dritten Bearbeitungsphase durchsucht die Steuerung der Nebenstellenanlage den Rufnummernplan nach der ersten Datenzeile mit passendem Wählmuster und prüft die Verfügbarkeit der in der Leitungs-Kenngröße angegebenen Verbindungsleitung. Steht diese Verbindungsleitung nicht zur Verfügung, wird die Verfügbarkeit der in der nächsten Datenzeile angegebenen Verbindungsleitung geprüft. Dieser Vorgang wird solange wiederholt, bis die Nebenstellenanlage entweder eine verfügbare Verbindungsleitung findet oder das Wählmuster der Datenzeile nicht zu der gewählten Rufnummer paßt. Damit wird vermieden, daß die Nebenstellenanlage den gesamten Rufnummernplan nach Datenzeilen mit passendem Wählmuster durchsuchen muß.

Eine vorteilhafte Weiterbildung des Verfahrens gemäß Anspruch 4 sieht vor, daß Gruppen aufeinander folgender Datenzeilen mit gleichem Wählmuster zusammengefaßt werden. Voraussetzung hierfür ist, daß die Anzahl der Datenzeilen in den Gruppen identisch ist und daß die aufeinander folgenden Datenzeilen der Gruppen jeweils die gleiche Folge von Werten der Leitungs-Kenngröße bilden. Durch diese Weiterbildung wird die Anzahl der in der Nebenstellenanlage zu speichernden Datenzeilen erheblich verringert.

Die vorteilhaften Wirkungen des erfindungsgemäßen Verfahrens werden auch dann erzielt, wenn die oben beschriebene zweite Bearbeitungsphase vor der ersten Bearbeitungsphase durchgeführt wird. Daran kann sich dann auch die dritte Bearbeitungsphase wieder anschließen.

Gemäß Anspruch 12 wird im Anschluß an das Bearbeiten des Rufnummernplans eine Steuerdatei für die Nebenstellenanlage erstellt. Dabei werden aus den im Rufnummernplan verbliebenen Datenzeilen Anweisungen für die Nebenstellenanlage erzeugt. Diese Anweisungen hängen vom Typ der verwendeten Nebenstellenanlage ab. Bei einer HICOM 300 Nebenstellenanlage wird eine solche Anweisung z.B. durch das Symbol "EINR-LDPLN:" markiert. Diesem Symbol folgen die Werte für die einzelnen Kenngrößen, z.B. das Wählmuster, wobei als Trennzeichen zwischen den Werten ein Komma eingefügt wird. Ein Semikolon markiert das Ende der Anweisung.

Nachfolgend wird ein Beispiel der Erfindung anhand der Zeichnung näher erläutert. Darin zeigen:
- Figur 1: schematisch den Aufbau eines Telefonnetzes,
- Figur 2: einen Rufnummernplan,
- Figur 3: den Rufnummernplan nach Figur 2 nach der Bearbeitung in der zweiten und dritten Phase,
- Figur 4: den Rufnummernplan nach Figur 3 nach der Bearbeitung in der vierten Phase,
- Figur 5: die Verfahrensschritte der ersten Phase,
- Figur 6: die Verfahrensschritte der zweiten Phase,
- Figur 7: die Verfahrensschritte der dritten Phase,
- Figur 8: die Verfahrensschritte für den ersten Abschnitt der vierten Phase, wobei überprüft wird, ob Datenzeilen zusammengefaßt werden können, und
- Figur 9: die Verfahrensschritte für den zweiten Abschnitt der vierten Phase.

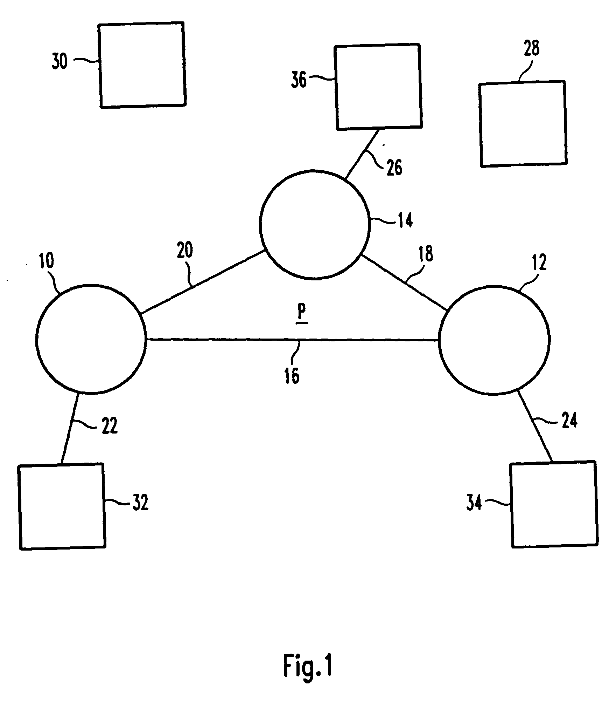

Figur 1 zeigt mehrere Nebenstellenanlagen 10, 12 und 14, die zu einem Privatnetz P gehören. Die an die Nebenstellenanlagen 10, 12, 14 angeschlossenen Nebenstellen sind aus Gründen der besseren Übersicht nicht eingezeichnet. Die Nebenstellenanlagen 10, 12 und 14 sind mittels Querverbindungen 16, 18 und 20 miteinander verbunden, die z.B. mit Hilfe von Standleitungen realisiert werden. Über Leitungsbündel 22, 24 und 26 sind die Nebenstellenanlagen 10, 12 und 14 an je ein Ortsnetz 32, 34, 36 angeschlossen. Ferner zeigt Figur 1 zwei Ortsnetze 28 und 30, die vom Privatnetz P aus nur über das öffentliche Telefonnetz zu erreichen sind. Jedes Ortsnetz 28, 30, 32, 34, 36 enthält eine oder mehrere Ortsvermittlungsstellen, Endgeräte und Leitungen zwischen diesen Endgeräten und den Ortsvermittlungsstellen. Die örtliche Verteilung der in Figur 1 gezeigten Nebenstellenanlagen 10, 12, 14 und der Ortsnetze 28 bis 36 ist annähernd ein verkleinertes Abbild der tatsächlichen geographischen Anordnung.

Das Privatnetz P mit den Nebenstellenanlagen 10, 12, 14 ermöglicht es, daß Amtsgespräche, d.h. Gespräche zu Teilnehmern im öffentlichen Telefonnetz, zu einem großen Teil über das Privatnetz P übertragen werden, wodurch Kosten gespart werden können. Dieses Leistungsmerkmal unter Nutzung eines Privatnetzes P wird als "Wegewahl zu minimalen Kosten" bzw. "Least Cost Routing", kurz LCR, bezeichnet. Um diese Wegewahl zu erreichen, werden die Gespräche so weit wie möglich im Privatnetz P übertragen und erst in nächster Nähe zum Zielort über das öffentliche Telefonnetz geführt. Dieses Verfahren ist an sich bekannt und wird auch als "Central Office Break-Out" bezeichnet. Mit dem Verfahren können z.B. Gespräche von einem Teilnehmer im Privatnetz P zu Teilnehmern in den Ortsnetzen 32, 34, 36, in denen sich jeweils eine der Nebenstellenanlagen 10, 12, 14 befindet, zum Ortstarif geführt werden.

Die Nebenstellenanlagen 10, 12, 14 führen die Wegewahl unabhängig voneinander durch, weshalb sie auch als autonom bezeichnet werden. Jeder Nebenstellenanlage 10, 12, 14 werden die möglichen Wege vorgegeben, um eine Telefonverbindung zu einem Teilnehmer im öffentlichen Telefonnetz herzustellen. Die Wegewahl erfolgt statisch, d.h. der Weg, über den eine Telefonverbindung hergestellt wird, hängt von der Verfügbarkeit der Wege zum Zeitpunkt der Verbindungsanfrage ab.

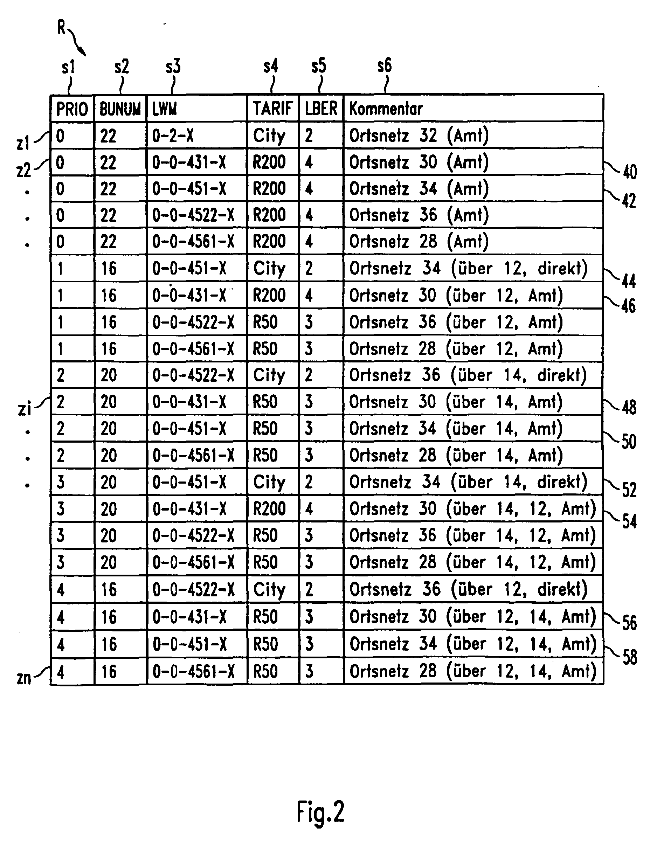

Figur 2 zeigt einen Rufnummernplan R für die Nebenstellenanlage 10. Dieser Rufnummernplan R enthält Informationen, die die Nebenstellenanlage 10 benötigt, um Telefonverbindungen von einem Teilnehmer des Privatnetzes P zu einem Teilnehmer in einem der Ortsnetze 28, 30, 32, 34, 36 aufzubauen. Jede weitere Nebenstellenanlage 12, 14 hat ebenfalls einen Rufnummernplan nach Art des Rufnummernplans R. In dem Ausführungsbeispiel wird angenommen, daß sich die Nebenstellenanlage 12 im Ortsnetz 34 mit der Ortsnetzkennzahl "0451" und die Nebenstellenanlage 14 im Ortsnetz 36 mit der Ortsnetzkennzahl "04522" befindet. Dem Ortsnetz 28 ist die Ortsnetzkennzahl "04561" und dem Ortsnetz 30 die Ortsnetzkennzahl "0431" zugeordnet.

Der Rufnummernplan R ist als Liste von Datenzeilen z1 bis zn aufgebaut und enthält Spalten s1 bis s6 für Kenngrößen PRIO, BUNUM, LWM, TARIF, LBER, deren Bedeutung weiter unten noch erläutert wird, und für einen Kommentar. Jede Datenzeile z1 bis zn, z.B. die in Figur 2 näher bezeichneten Datenzeilen 40 bis 58, definiert einen Weg, über den eine Telefonverbindung zwischen der Nebenstellenanlage 10 und einem Zielort geführt werden kann.

Die erste Spalte s1 enthält für jede Datenzeile z1 bis zn die Prioritätskennzahl PRIO. Mit Hilfe dieser Prioritätskennzahl PRIO wird in den nachfolgend beschriebenen Bearbeitungsphasen eine Auswahl unter Datenzeilen z1 bis zn getroffen, die Wege mit gleichem Tarifwert zum selben Zielort beschreiben. Die Prioritätskennzahl PRIO in den Datenzeilen z1 bis zn ist in diesem Beispiel abhängig von den Entfernungen zwischen der Nebenstellenanlage 10 und der Nebenstellenanlage 10, 12, 14, von der aus der Amtsausstieg erfolgt. Je kleiner die Prioritätskennzahl PRIO ist, um so kürzer ist die Entfernung. Die Prioritätskennzahl PRIO hat den Wert "0", falls die Datenzeile zi (i ist eine Laufvariable) einen Weg beschreibt, bei dem der Amtsausstieg von der Nebenstellenanlage 10 aus in das Ortsnetz 32 erfolgt. Datenzeilen zi, die Wege definieren, bei denen der Amtsausstieg in der Nebenstellenanlage 12 erfolgt und die Gespräche über die Querleitung 16 zur Nebenstellenanlage 12 geführt werden, haben die Prioritätskennzahl PRIO mit dem Wert "1". Bei Datenzeilen zi, bei denen die Gespräche über die Querleitungen 20 und 18 zur Nebenstellenanlage 12 geleitet werden, hat die Prioritätskennzahl PRIO den Wert "3". Der Wert "2" wird der Prioritätskennzahl PRIO zugewiesen, falls die Datenzeile zi einen Weg festlegt, bei dem der Amtsausstieg in der Nebenstellenanlage 14 erfolgt und die Querleitung 20 benutzt wird. Wird das Gespräch über die Querleitungen 16 und 18 an die Nebenstellenanlage 14 vermittelt, wird die Prioritätskennzahl PRIO der entsprechenden Datenzeile auf den Wert "4" gesetzt.

Die Kenngröße BUNUM (Bündelnummer) in der zweiten Spalte s2 legt fest, wie die Nebenstellenanlage 10 ein Telefongespräch weiterleitet. Bei dem in Figur 1 gezeigten Privatnetz P gibt die Nebenstellenanlage 10 das Gespräch über die Querverbindung 16 an die Nebenstellenanlage 12 weiter oder über die Querverbindung 20 an die Nebenstellenanlage 14 oder über das Leitungsbündel 22 an das öffentliche Telefonnetz. Demgemäß hat die Kenngröße BUNUM den Wertebereich 16, 20, 22.

Die Kenngröße LWM (Leitungswählmuster) in der dritten Spalte s3 verweist auf eine Zeichenfolge, die das Wählmuster für den Weg definiert, der durch die Datenzeile beschrieben wird. Mit einer ersten Ziffer "0" werden Amtsgespräche gekennzeichnet. Danach folgt die Ortsnetzkennzahl des Zielortes, z.B. in Datenzeile 40 die Wählfolge "0431", und ein Platzhalter "X". Der Platzhalter "X" steht für die Nummern der Endgeräte am Zielort.

Die vierte Spalte s4 enthält die Kenngröße TARIF mit dem Telefontarif, nach dem sich die Gebühren für das Gespräch berechnen. In diesem Beispiel werden die drei Tarife City, Region 50 und Region 200 verwendet. Es gilt, daß der Region 50-Tarif, kurz R50, teurer ist als der Tarif City und der Region 200-Tarif teuerer als der Tarif R50 ist.

Der Betrag der Kenngröße LBER (Leitungsberechtigung) in der fünften Spalte s5 legt eine Berechtigungsstufe fest. Diese Berechtigungsstufe gestattet es einem Teilnehmer, Amtsgespräche über den jeweiligen Weg führen zu können. Die Kenngröße LBER steht in dem dargestellten Rufnummernplan R in einem engen Zusammenhang mit der Kenngröße TARIF, so daß teure Amtsgespräche nur bestimmten Teilnehmern zugänglich gemacht werden. Je höher der Wert der Kenngröße LBER, um so höher der Telefontarif. In diesem Beispiel wird für Gespräche, die zum City-Tarif geführt werden, die Berechtigungsstufe "2" verlangt. Telefonverbindungen zum teureren Tarif R50, setzen die Berechtigungsstufe "3" voraus. Gespräche zum noch teureren Tarif R200, dürfen nur Teilnehmer mit der Berechtigungsstufe "4" führen. Weiterhin wird in diesem Beispiel angenommen, daß ein Teilnehmer mit der Berechtigungsstufe "4" auch Gespräche zum City- und R50-Tarif führen darf. Entsprechendes gilt für einen Teilnehmer mit der Berechtigungsstufe "3".

In der Spalte S6 gibt es ferner zu jeder Datenzeile zi ein Informationsfeld Kommentar, in dem ein erläuternder Text steht. Der Kommentar "Ortsnetz 34 (über 14, Amt)" einer Datenzeile zi) weist z.B. darauf hin, daß die Datenzeile einen Weg zum Ortsnetz 34 beschreibt, bei dem das Telefongespräch zur Nebenstellenanlage 14 vermittelt und dort an das öffentliche Telefonnetz übergeben wird.

Für eine Telefonverbindung von einem Teilnehmer der Nebenstellenanlage 10 zu einem Teilnehmer im Ortsnetz 34 mit der Ortsnetzkennzahl "0451" gibt es im gezeigten Rufnummernplan R beispielsweise folgende fünf Wege W1 bis W5: Gemäß Datenzeile 42 erfolgt der Ausstieg in das öffentliche Telefonnetz am Ortsnetz 32 über das Leitungsbündel 22 (BUNUM = 22) direkt in der Nebenstellenanlage 10. Für ein solches Gespräch mit dem Weg W1 gilt der Telefontarif R200 (TARIF = R200).

Für den Weg W2 wird gemäß Datenzeile 44 über die Querverbindung 16 (BUNUM = 16) eine Telefonverbindung innerhalb des Privatnetzes P zur Nebenstellenanlage 12 hergestellt. Der Amtsausstieg zum Ortsnetz 34 erfolgt von der Nebenstellenanlage 12 aus über das Leitungsbündel 24. Da die Nebenstellenanlage 12 zum Ortsnetz 34 gehört, gilt für ein solches Gespräch der City-Tarif (TARIF = City).

Beim dritten Weg W3, beschrieben durch die Datenzeile 50, wird das Gespräch über die Querverbindung 20 (BUNUM = 20) zunächst zur Nebenstellenanlage 14, die zum Ortsnetz 36 gehört, geleitet. In der Nebenstellenanlage 14 erfolgt der Amtsausstieg über das Leitungsbündel 26. Die Gebühren richten sich bei diesem Weg W3 nach dem Tarif R50 (TARIF = R50).

Die Datenzeile 52 definiert den vierten Weg W4, der ebenfalls über die Querverbindung 20 (BUNUM = 20) zur Nebenstellenanlage 14 führt. Das Gespräch wird jedoch über die Querverbindung 18 an die Nebenstellenanlage 12 und dort über das Leitungsbündel 24 an das öffentliche Telefonnetz (Ortsnetz 34) weitergeleitet. In diesem Fall gilt der City-Tarif (TARIF = City).

Schließlich gibt es noch den Weg W5, definiert durch die Datenzeile 58, bei dem das Gespräch über die Querverbindungen 16 (BUNUM = 16) und 18 zur Nebenstellenanlage 14 und von dort an das öffentliche Telefonnetz geleitet wird. Für den Weg W5 gilt, wie schon bei dem Weg W3, der Telefontarif R50 (TARIF = R50).

Gemäß der Erfindung werden alle Datenzeilen z1 bis zn des Rufnummernplans R in verschiedenen Phasen bearbeitet. In einer ersten Phase des Verfahrens werden die Datenzeilen z1 bis zn abhängig von der Prioritätskennzahl PRIO nacheinander ausgewertet. Zum besseren Verständnis wird das Verfahren beschrieben, nachdem bereits Datenzeilen z1 bis zi-1 abgearbeitet sind. In der ersten Phase werden die Kenngrößen LWM und BUNUM der aktuellen Datenzeile zi mit den Kenngrößen LWM und BUNUM der bereits ausgewerteten Datenzeilen z1 bis zi-1 verglichen, wobei eine Datenzeile zj gesucht wird, deren Kenngrößen LWM und BUNUM sowohl mit der Kenngröße LWM als auch mit der Kenngröße BUNUM der aktuellen Datenzeile zi übereinstimmen. Wird eine solche Datenzeile zj gefunden, werden die Werte der Kenngröße TARIF der beiden Datenzeilen zi und zj miteinander verglichen. Von diesen beiden Datenzeilen zi, zj wird die mit dem höheren Wert, d.h. teureren Tarif, aus dem Rufnummernplan R entfernt. Stimmen die Werte der Kenngröße TARIF der Datenzeilen zi und zj genau überein, wird von den beiden Datenzeilen zi, zj diejenige mit der höheren Prioritätskennzahl PRIO gelöscht.

Von den oben angegebenen Datenzeilen 42, 44, 50, 52 und 58 werden auf Grund der beschriebenen Verfahrensweise die Datenzeile 50 für den Weg W3 und die Datenzeile 58 für den Weg W5 aus dem Rufnummernplan R entfernt. Die Datenzeile 50 fällt weg, da die Datenzeile 52 bei gleichen Kenngrößen LWM und BUNUM einen niedrigeren Tarif enthält. Die Datenzeile 58 wird aus dem Rufnummernplan R gelöscht, weil die Datenzeile 44 einen günstigeren Tarif enthält.

In einer zweiten Phase werden Datenzeilen mit gleicher Kenngröße LWM gelöscht, die zusätzlich einen gleich hohen oder höheren Kennwert TARIF haben, als die Datenzeile mit der kleinsten Prioritätskennzahl PRIO. Zunächst wird die Datenzeile ermittelt, die bei kleinster Prioritätskennzahl PRIO, den höchsten Tarif, d.h. maximaler Wert der Kenngröße TARIF, besitzt. Dieser Wert wird anschließend mit dem Wert der Kenngröße TARIF aller weiterer Datenzeilen mit gleichem Wählmuster, d.h. gleicher Wert der Kenngröße LWM, verglichen. Die Datenzeilen zi, deren Kenngröße TARIF einen gleich hohen oder höheren Telefontarif aufweisen, werden aus dem Rufnummernplan R entfernt.

Zur Veranschaulichung dieses Verfahrens dienen die Datenzeilen 40, 46, 48, 54 und 56, die Wege W6 bis W10 zum Ortsnetz 30 definieren. Beim Weg W6 (Datenzeile 40) erfolgt der Amtsausstieg bereits von der Nebenstellenanlage 10 aus. Die Gespräche werden über das Leitungsbündel 22 an das Ortsnetz 32 übergeben. Für diesen Weg W6 ist TARIF = R200. Für den Weg W7 (Datenzeile 46) wird eine Verbindung zur Nebenstellenanlage 12 hergestellt, von der aus der Amtsausstieg in das Ortsnetz 34 erfolgt. Auch für diesen Weg gilt TARIF = R200. Beim dritten Weg W8 (Datenzeile 48) berechnen sich die Gebühren nach dem Tarifwert R50, da hier die Gespräche über die Querleitung 20 zur Nebenstellenanlage 14 geführt werden und dort an das Ortsnetz 36 übergeben werden. Werden die Gespräche gemäß dem Weg W9 (Datenzeile 54) über die Querleitungen 20 und 18 zur Nebenstellenanlage 12 geleitet, richten sich die Gebühren nach dem Tarifwert R200. Erfolgt der Amtsausstieg entsprechend dem Weg W10 (Datenzeile 56) in der Nebenstellenanlage 14, zu der eine Telefonverbindung über die Querleitungen 16 und 18 hergestellt wird, gilt der Tarifwert R50.

Die Prioritätskennzahl PRIO der Datenzeile 40 hat den niedrigsten Wert "0", da wie oben erläutert, beim zugehörigen Weg W6 die Gespräche direkt an das öffentliche Telefonnetz übergeben werden. Von den Datenzeilen 46, 48, 54 und 56 zu den Wegen W7 bis W10 werden die Datenzeile 46 für den Weg W7 und die Datenzeile 54 für den Weg W9 aus dem Rufnummernplan R entfernt, da sie wie die Datenzeile 40 den Tarifwert R200 besitzen.

Nach Abschluß der zweiten Phase enthält der Rufnummernplan R nur noch die Datenzeilen, die Wege definieren, bei denen der Amtsausstieg von der Nebenstellenanlage 10 aus oder in unmittelbarer Nähe zu einem der Ortsnetze 28 bis 36 erfolgt.

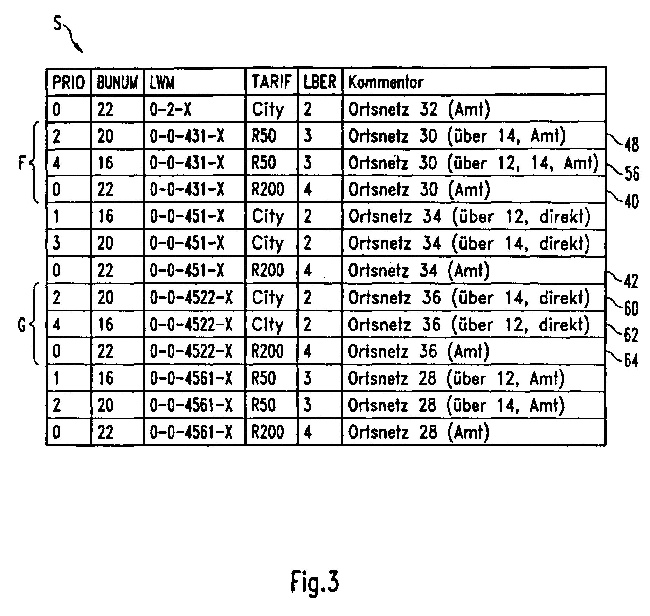

Figur 3 zeigt einen Rufnummernplan S, der die nach der zweiten Bearbeitungsphase verbliebenen Datenzeilen des Rufnummernplans R in folgender Anordnung enthält: Datenzeilen mit gleicher Kenngröße LWM sind zusammengefaßt und liegen unmittelbar hintereinander, z.B. die Datenzeilen 40, 48, 56 mit der Kenngröße LWM = 0-0-431-X (Ortsnetz 30), die einen Datenbereich F bilden. In den Datenzeilen 48 und 56 hat die Kenngröße TARIF einen niedrigeren Wert (nämlich R50) als die Datenzeile 40 (R200). Die Datenzeile 48 steht im Rufnummernplan S vor der Datenzeile 56, da die Prioritätskennzahl PRIO in der Datenzeile 48 (PRIO = 2) kleiner ist als die Prioritätskennzahl PRIO der Datenzeile 56 (PRIO = 4). Die Datenzeilen mit gleichem Wert der Kenngröße LWM werden in aufsteigender Reihenfolge des Tarifwertes sortiert. Bei Datenzeilen mit gleichem Tarifwert richtet sich die Reihenfolge nach dem Wert der Prioritätskennzahl PRIO, wobei diejenige Datenzeile mit kleinerem Wert der Prioritätskennzahl PRIO vor der Datenzeile mit größerem Wert der Prioritätskennzahl PRIO steht.

Wählt ein an die Nebenstellenanlage 10 angeschlossener Teilnehmer die Nummer eines Teilnehmers im Ortsnetz "0431", prüft die Nebenstellenanlage 10 zuerst die Verfügbarkeit der Querverbindung 20 (Weg W8). Steht diese Querverbindung 20 nicht zur Verfügung, versucht die Nebenstellenanlage 10 gemäß Datenzeile 56, das Gespräch über die Querverbindung 16 an die Nebenstellenanlage 12 weiterzuleiten (Weg W10). Falls auch das nicht möglich ist, erfolgt der Amtsausstieg über das Leitungsbündel 22 (Weg W6). Die Alternative über den Weg W6 setzt jedoch voraus, daß der Teilnehmer des Privatnetzes P über die Berechtigungsstufe "4" verfügt, d.h. LBER = 4.

Ein Datenbereich G enthält die Datenzeilen 60, 62 und 64, die Wege zum Ortsnetz 36 mit der Ortsnetzkennzahl "04522" definieren. Die Nebenstellenanlage 10 versucht ein Gespräch von einem ihrer Teilnehmer zu einem Teilnehmer im Ortsnetz 36 zunächst über die Querverbindung 20 an die Nebenstellenanlage 14 weiterzugeben (Datenzeile 60). Kann die Querverbindung 20 nicht genutzt werden, versucht die Nebenstellenanlage 10 auf die Querverbindung 16 auszuweichen (Datenzeile 62). Kommt die Verbindung auch über diesen Weg nicht zustande, besteht noch die Möglichkeit, über das Leitungsbündel 22 das Gespräch an das öffentliche Telefonnetz weiterzugeben. In beiden Datenbereichen F und G treten in unmittelbar aufeinanderfolgenden Datenzeilen 48, 56, 40 und 60, 62, 64 dieselbe Folge von Werten der Kenngröße BUNUM auf, nämlich 20, 16, 22.

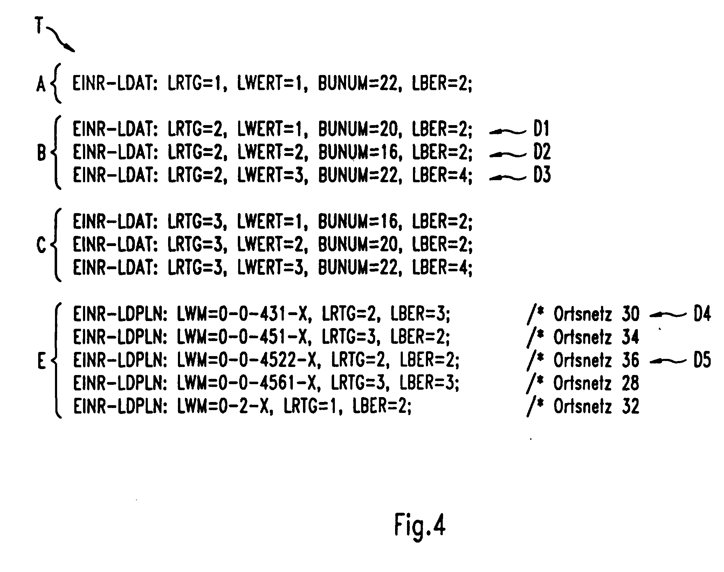

In einer vierten Phase der Bearbeitung, die im folgenden unter Bezugnahme auf Figur 4 beschrieben wird, werden aus den Informationen der Datenzeilen 48, 56, 40, 60, 62, 64 der Datenbereiche F und G neue Datenzeilen D1 bis D5 gebildet, wodurch eine Datenreduktion erreicht wird. Figur 4 zeigt eine Steuerdatei T mit Datenzeilen, die zur Programmierung einer Nebenstellenanlage vom Typ HICOM benötigt werden. Diese Steuerdatei T ist nach der Bearbeitung des Rufnummernplans S in der vierten Phase des erfindungsgemäßen Verfahrens, entstanden.

Die Datenbereiche A, B und C bestehen jeweils aus einer Gruppe von Datenzeilen, z.B. die Datenzeilen D1 bis D3, die Informationen über die Wege enthalten. Diese Datenzeilen werden auch als LDAT-Datensätze (Least Cost Routing Data) bezeichnet. Die LDAT-Datensätze D1 bis D3 zeigen, wie sich die Datenbereiche F und G aus Figur 3 zu einem Datenbereich B zusammenfassen lassen, da sie Gemeinsamkeiten im Hinblick auf die Kenngröße BUNUM besitzen.

Der erste LDAT-Datensatz D1 wird aus den Informationen der Datenzeilen 48 und 60 gebildet. Der LDAT-Datensatz D1 wird durch das Symbol "EINR-LDAT:" markiert, das jedem LDAT-Datensatz vorangestellt wird. Mit der Zeichenfolge "LRTG = 2" wird einer Kenngröße LRTG (Leitungsrichtung) der Wert "2" zugewiesen. Über die Kenngröße LRTG wird jeder LDAT-Datensatz einem der Datenbereiche A, B oder C zugeordnet, wobei z.B. der Wert "2" dem Datenbereich B entspricht. Als nächstes folgt die Zeichenfolge "LWERT = 1", die einer Kenngröße LWERT den Wert "1" zuweist. Der Wert der Kenngröße LWERT entspricht der Position der beiden Datenzeile 48 und 60 in den Datenbereichen F bzw. G. Mit der Zeichenfolge "BUNUM = 20" wird die Nummer des zu prüfenden Leitungsbündel bestimmt; in diesem Fall also das Bündel 20, das die Nebenstellenanlagen 10 und 14 miteinander verbindet. Die Zeichenfolge "LBER = 2" legt als Berechtigungsstufe, über die der Teilnehmer des Privatnetzes P mindestens verfügen muß, den Wert "2" fest.

Als Trennzeichen zwischen den Zeichenfolgen, mit denen die Wertzuweisungen an die Kenngrößen erfolgen, wird ein Kommazeichen "," gesetzt. Der LDAT-Datensatz D1 wird, wie alle übrigen LDAT-Datensätze, mit einem Semikolon ";" abgeschlossen.

Der zweite LDAT-Datensatz D2 enthält die Informationen der Datenzeilen 56 und 62. Dieser LDAT-Datensatz D2 unterscheidet sich vom LDAT-Datensatz D1 lediglich in den Kenngrößen LWERT und BUNUM. Da es sich bei den Datenzeilen 56 und 62 um die jeweils zweite Datenzeile in den Datenbereichen F bzw. G handelt, wird die Kenngröße LWERT auf den Wert "2" gesetzt. Die Kenngröße BUNUM wird auf den Wert "16" gesetzt, der der Bündelnummer 16 entspricht.

Der dritte LDAT-Datensatz D3 enthält die Informationen der Datenzeilen 40 und 64. Die Kenngröße LWERT erhält den Wert "3", weil dieser LDAT-Datensatz D3 die jeweils dritten Datenzeilen der Datenbereiche F und G zusammenfaßt. Die Kenngröße BUNUM wird auf den Wert "22" und die Kenngröße LBER auf den Wert "4" gesetzt.

Analog zu dem gerade Beschriebenen werden alle Datenbereiche des Rufnummernplans S zusammengefaßt, bei denen die Anzahl der Datenzeilen und die bei unmittelbar aufeinanderfolgenden Datenzeilen erhaltene Abfolge der Werte der Kenngröße BUNUM übereinstimmen. In den gerade beschriebenen LDAT-Datensätzen D1, D2, D3 fehlen jedoch die Informationen über die Wählmuster LWM und die unterschiedlichen Berechtigungsstufen LBER, z.B. in den Datenzeilen 48 und 60. Diese Informationen sind in einem Datenbereich E, dem sogenannten LCR-Rufnummernhaushalt (Least Cost Routing-Rufnummernhaushalt), enthalten. Für jeden Zielort im Rufnummernplan S gibt es eine Datenzeile im LCR-Rufnummernhaushalt. Eine solche Datenzeile wird auch als LDPLN-Datensatz (Least Cost Routing Dial Plan) bezeichnet.

Der Aufbau der LDPLN-Datensätze wird anhand des LDPLN-Datensatzes D4 näher erläutert. Der LDPLN-Datensatz D4 wird durch das vorangestellte Symbol "EINR-LDPLN:" gekennzeichnet. Die Zeichenfolge "LWM = 0-0-431-X" legt fest, daß dieser LDPLN-Datensatz D4 für alle Verbindungen in das Ortsnetz mit der Ortsnetzkennzahl "0431" (Ortsnetz 30) gelten soll. Die Zeichenfolge "LRTG = 2" verweist auf die LDAT-Datensätze D1 bis D3, deren Kenngröße LRTG, wie oben beschrieben, den Wert "2" erhalten hat.

Über die Zeichenfolge "LBER = 3" wird die Nebenstellenanlage 10 angewiesen, nur Teilnehmer mit einer Berechtigungsstufe LBER = 3 oder höher zu einem Teilnehmer im Ortsnetz 30 telefonieren zu lassen. Diese Information war z.B. bei der Bildung des LDAT-Datensatzes D1 aus den Datenzeilen 48 und 60 verlorengegangen. Der Kenngröße LBER des LDPLN-Datensatzes D4 wird die niedrigste Berechtigungsstufe des Datenbereiches F zugewiesen.

Als Trennzeichen zwischen den Zuweisungen wird das Kommazeichen "," benutzt, und die letzte Zuweisung wird mit einem Semikolon ";" abgeschlossen. Danach folgt ein durch das Symbol "/*" gekennzeichneter Kommentar ("/* Ortsnetz 30").

Der LDPLN-Datensatz D5 enthält die für die Vermittlung von Gesprächen zu Teilnehmern in das Ortsnetz 36 (Datenbereich G aus Figur 3) notwendigen Informationen, d.h. das Wählmuster LWM (LWM = 0-0-4522-X), die Nummer des Datenbereiches B (LRTG = 2) und die Berechtigungsstufe (LBER = 2). Der Wert "2" für die Kenngröße LBER entspricht der niedrigsten Berechtigungsstufe im Datenbereich G.

Außer der Verringerung der zu speichernden Datenmenge vereinfacht die vierte Phase den Suchvorgang beim Verbindungsaufbau. Wählt ein Teilnehmer der Nebenstellenanlage 10 die Nummer eines Teilnehmers in einem der Ortsnetze 28 bis 36, durchsucht die Nebenstellenanlage 10 zunächst den LCR-Rufnummernhaushalt (Datenbereich E), nach dem LDPLN-Datensatz, dessen Wert der Kenngröße LWM zur gewählten Ortsnetzkennzahl paßt. Die Kenngröße LRTG verweist auf einen der Datenbereiche A,B,C mit den für die Weiterleitung der Gespräche notwendigen Informationen.

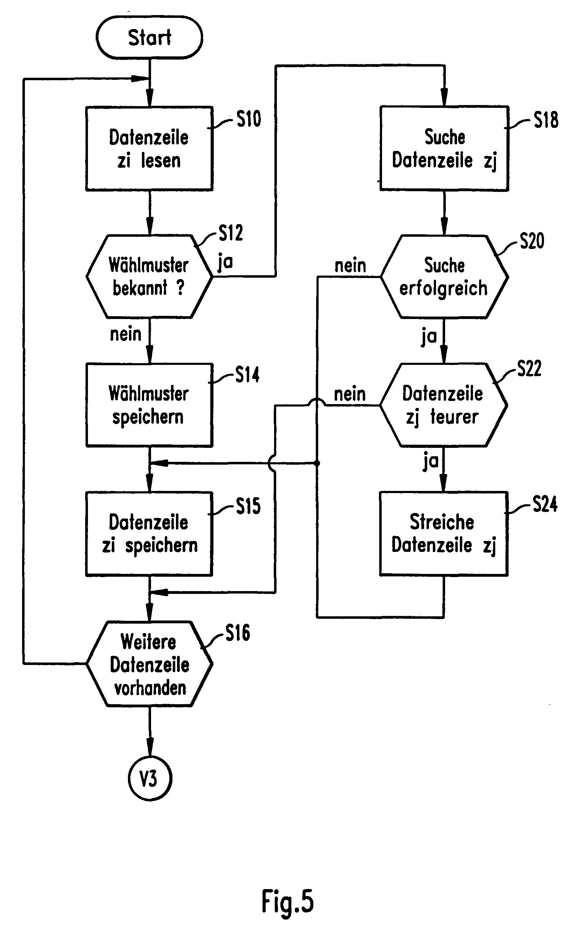

Anhand der Figuren 5 bis 9 wird das zuvor beschriebene Verfahren mit Hilfe eines Flußdiagramms weiter erläutert. Es wird angenommen, daß der Rufnummernplan R in Form einer Datei vorliegt. Jeder Weg von einem an die Nebenstellenanlage 10 angeschlossenen Teilnehmer zu einem Teilnehmer in einem der Ortsnetze 28, 30, 32, 34, 36 ist wie erwähnt durch eine Datenzeile z1 bis zn im Rufnummernplan R definiert.

Figur 5 zeigt die zur Durchführung der ersten Phase notwendigen Verfahrensschritte S10 bis S24. Die folgende Beschreibung geht davon aus, daß die Datenzeilen z1 bis zi-1 bereits entsprechend den Schritten S10 bis S24 ausgewertet worden sind und im Speicher eines Rechners, hier nicht dargestellt, vorliegen. Im Schritt S10 wird die aktuelle Datenzeile zi aus der Datei mit dem Rufnummernplan R, eingelesen. Die Abfrage S12 überprüft, ob das Wählmuster gemäß Kenngröße LWM der aktuellen Datenzeile zi schon aus einer der bereits ausgewerteten Datenzeilen z1 bis zi-1 bekannt ist. Fällt die Abfrage S12 negativ aus, wird das Wählmuster LWM der Datenzeile zi im Schritt S14 in eine Liste LWMLIST eingetragen. Diese Liste LWMLIST hat für jedes Wählmuster LWM, das in den Datenzeilen z1 bis zi-1 vorkommt, eine Zeile, die auch als Listenelement bezeichnet wird. Für jedes neue Wählmuster LWM wird die Liste LWMLIST um ein Listenelement erweitert, das auf eine Zeichenfolge, die dieses neue Wählmuster LWM definiert, verweist. Alle Listenelemente der Liste LWMLIST werden im gleichen Speicher wie die Datenzeilen z1 bis zi-1 gespeichert, so daß die Listenelemente in den folgenden Phasen durch einen einfachen Zugriff benutzt werden können.

Im Schritt S15 wird die Datenzeile zi gespeichert und die Bearbeitung mit der Abfrage S16 fortgesetzt. Wenn eine weitere Datenzeile vorhanden ist, wird zum Schritt S10 zurückgegangen. Andernfalls wird mit der Verzweigung V3 fortgefahren.

Hat die Abfrage S12 ergeben, daß die aktuelle Datenzeile zi ein aus den Datenzeilen z1 bis zi-1 bekanntes Wählmuster LWM enthält, wird im Verfahrensschritt S18 eine Vergleichsdatenzeile zj gesucht, deren Kenngrößen LWM und BUNUM mit den Kenngrößen LWM und BUNUM der aktuellen Datenzeile zi übereinstimmen. Konnte keine solche Vergleichsdatenzeile zj ermittelt werden (Abfrage S20), wird die Bearbeitung mit dem Schritt S15 fortgeführt und die aktuelle Datenzeile zi gespeichert.

Bei erfolgreicher Suche im Schritt S20 wird festgestellt, ob die Vergleichsdatenzeile zj einen aufwendigeren, d.h. teureren Weg beschreibt als die aktuelle Datenzeile zi (Abfrage S22). Hierfür werden zunächst die Kenngrößen TARIF der beiden Datenzeilen zi, zj miteinander verglichen. Bieten beide Datenzeilen zi, zj den gleichen Tarifwert, wird diejenige Datenzeile zi, zj mit der größeren Prioritätskennzahl PRIO gelöscht. Ergibt die Überprüfung, daß die Vergleichsdatenzeile zj einen höheren Tarifwert bzw. eine größere Prioritätskennzahl PRIO hat als die aktuelle Datenzeile zi, wird die Vergleichsdatenzeile zj im Schritt 24 aus dem Rufnummernplan R entfernt und die Bearbeitung mit dem Schritt S15 fortgesetzt, d.h. die aktuelle Datenzeile zi wird gespeichert. Fällt die Abfrage S22 negativ aus, wird zur Abfrage S16 verzweigt. Nach Bearbeitung der letzten Datenzeile zn, ist die erste Phase abgeschlossen.

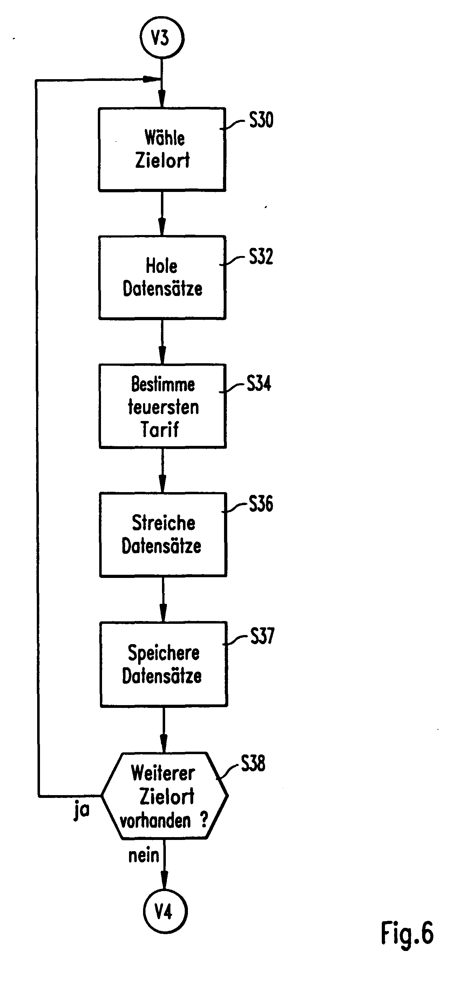

Bei der nachfolgenden Beschreibung der Figuren 6 bis 9 wird angenommen, daß sich die Datenzeilen in dem Speicher befinden, in den sie während der ersten Phase der Bearbeitung geschrieben worden sind. Figur 6 zeigt die Ablaufschritte S30 bis S38 der zweiten Phase. Im Schritt S30 wird das erste Wählmuster LWM aus der Liste LWMLIST ausgewählt, für das die nachfolgenden Bearbeitungsschritte S32 bis S37 durchgeführt werden. Anschließend werden alle Datenzeilen mit diesem Wählmuster LWM aus dem Speicher geholt (Schritt S32).

Im Verfahrensschritt S34 wird der Wert der Kenngröße TARIF der Datenzeile ermittelt, deren Prioritätskennzahl PRIO den Wert "0" hat. Die Datenzeile beschreibt den Weg, bei dem die Gespräche von der Nebenstellenanlage 10 direkt an das öffentliche Telefonnetz übergeben werden. Im Schritt S36 werden die Datenzeilen aus dem Rufnummernplan R entfernt, deren Kenngröße TARIF den gleichen oder einen höheren Wert hat als die Kenngröße TARIF der Datenzeile, deren Prioritätskennzahl PRIO den Wert "0" hat. Die verbleibenden Datenzeilen werden in der bisherigen Reihenfolge abgespeichert (Schritt S37). Anschließend wird in der Abfrage S38 überprüft, ob die Liste LWMLIST ein weiteres Wählmuster LWN enthält. Fällt die Abfrage S38 positiv aus, wird zum Schritt S30 verzweigt und das nächste Wählmuster LWM aus der Liste LWMLIST geholt. Die zweite Phase ist abgeschlossen, wenn die Abfrage S38 negativ ausfällt. In diesem Fall wird mit der Verzweigung V4 fortgefahren.

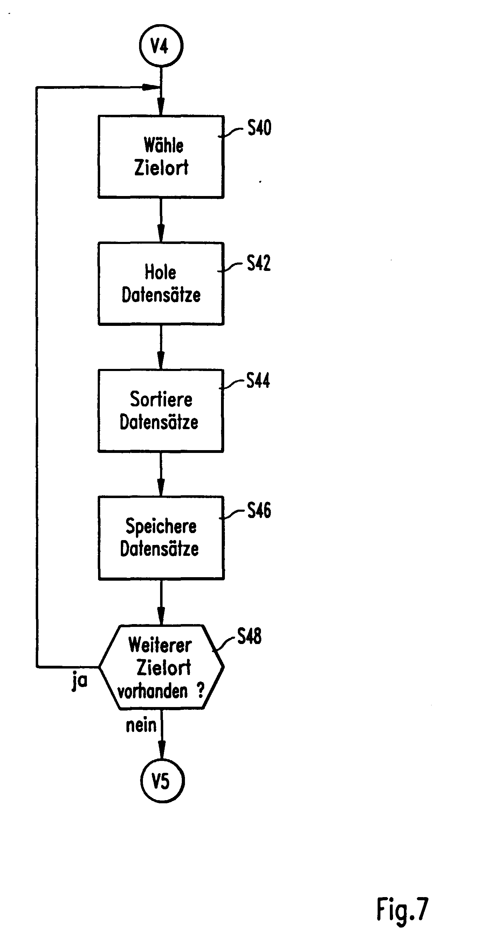

Figur 7 zeigt die Verfahrensschritte S40 bis S48 der dritten Phase, in der die Datenzeilen mit gleicher Kenngröße LWM abhängig von der Kenngröße TARIF und der Prioritätskennzahl PRIO geordnet werden. Im Schritt S40 wird aus der Liste LWMLIST das erste Wählmuster LWM ausgewählt.

Alle Datenzeilen, deren Kenngröße LWM dieses Wählmuster enthalten, werden im Schritt S42 aus dem Speicher geholt. Mit Hilfe eines Sortiervorgangs (Schritt S44) werden diese Datenzeilen unter Berücksichtigung der Kenngröße TARIF geordnet, d.h. eine Datenzeile, deren Kenngröße TARIF einen niedrigeren Wert hat, steht nach dem Sortiervorgang vor einer Datenzeile mit einem höheren Wert der Kenngröße TARIF. Bei Datenzeilen mit gleichem Tarifwert erfolgt eine Anordnung derart, daß die Datenzeile mit der kleineren Prioritätskennzahl PRIO vor der Datenzeile mit größerer Prioritätskennzahl PRIO steht.

Im Anschluß an diesen Sortiervorgang werden die Datenzeilen wieder gespeichert (Schritt S46). Dieser Sortiervorgang wird mit allen Datenzeilen, die jeweils Wege zu einem der Ortsnetze 28 bis 36 definieren, durchgeführt. In der Abfrage S48 wird geprüft, ob die Liste LWMLIST ein weiteres Wählmuster LWM enthält. In diesem Fall wird zum Ablaufschritt S40 zurückgesprungen. Ergibt die Abfrage S48, daß die Liste LWMLIST keine weiteren Wählmuster enthält, ist die dritte Phase beendet.

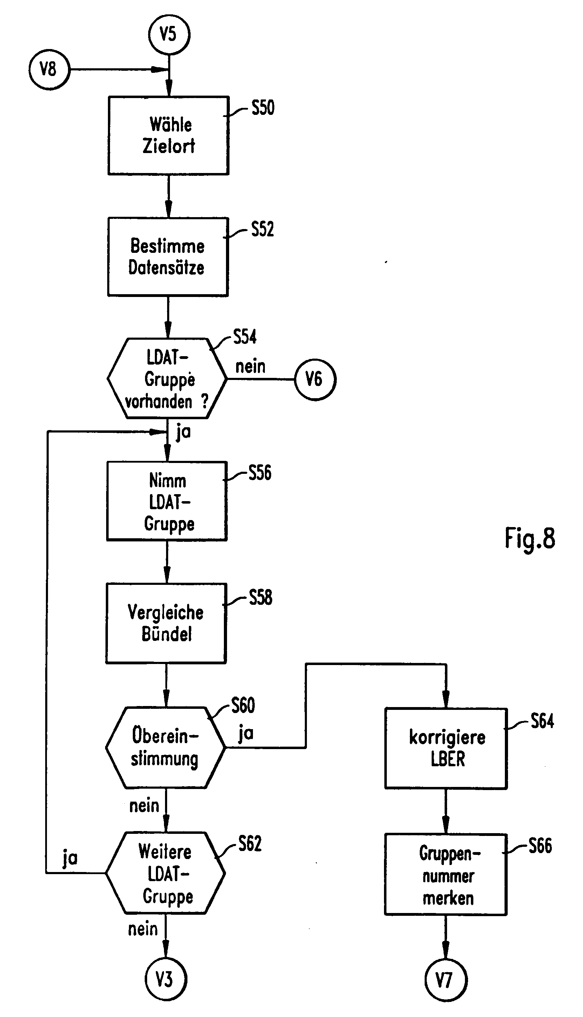

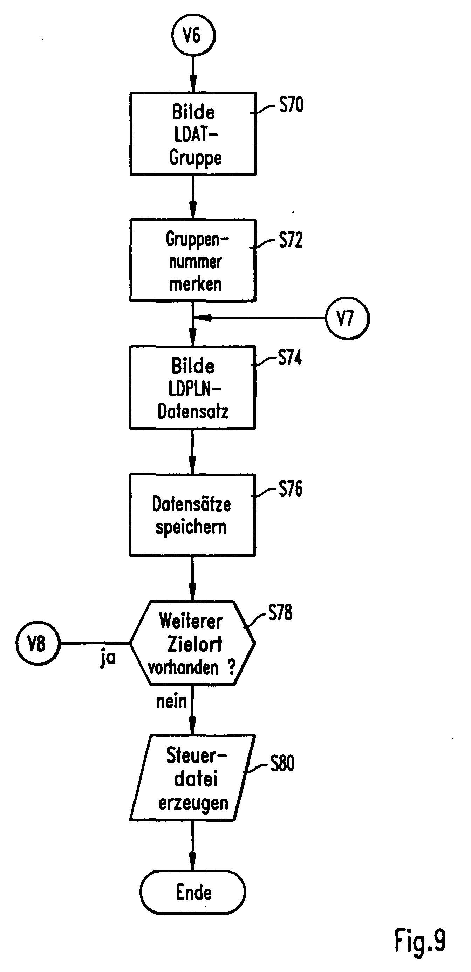

Die Figuren 8 und 9 zeigen Flußdiagramme für die vierte Phase der Bearbeitung des Rufnummernplans R. Die vierte Phase bildet aus einer sortierten Gruppe von Datenzeilen mit gleichem Wählmuster, d.h. der jeweilige Wert der Kenngröße LWM stimmt überein, eine Gruppe von Datenzeilen, sogenannte LDAT-Datensätze, die statt des Wählmusters eine Gruppennummer haben, und eine Datenzeile, nachfolgend als LDPLN-Datensatz bezeichnet, in der das Wählmuster LWM und diese Gruppennummer steht. Gruppen von LDAT-Datensätzen, bei denen durch die jeweils aufeinanderfolgenden LDAT-Datensätze sich eine identische Abfolge der Werte der Kenngröße BUNUM ergibt, werden zu einer Gruppe LDAT-Datensätze zusammengefaßt, wodurch sich die Anzahl der zu speichernden Datenzeilen verringert. Nach der Bearbeitung aller Datenzeilen wird die Steuerdatei T für die Nebenstellenanlage 10 erzeugt.

Zunächst wird aus der Liste LWMLIST das erste Wählmuster LWM ausgewählt (Schritt S50). Anschließend werden alle Datenzeilen mit diesem Wählmuster LWM aus dem Speicher geholt (Schritt S52). Diese Datenzeilen werden im folgenden als zu verarbeitende Datenzeilen bezeichnet.

Ergibt die Anfrage S54, daß noch keine Gruppe mit LDAT-Datensätzen, kurz LDAT-Gruppe, vorhanden ist, wird zum Schritt S70 in Figur 9 verzweigt. Gibt es bereits eine LDAT-Gruppe, wird sie aus dem Speicher geholt (Schritt S56). Im Schritt S58 werden die Reihenfolgen der Bündelnummern BUNUM in der Gruppe der zu verarbeitenden Datenzeilen und in der LDAT-Gruppe miteinander verglichen. Stimmen die Reihenfolgen nicht überein (Abfrage S60), stellt die Anfrage S62 fest, ob mit einer weiteren LDAT-Gruppe verglichen werden kann und verzweigt in diesem Fall zum Schritt S56. Im "Nein"-Zweig wird die Bearbeitung mit dem Schritt S70 in Figur 9 fortgesetzt.

Stimmen die Reihenfolgen der Bündelnummern BUNUM überein (Anfrage S60), werden im Schritt S64 die Berechtigungsstufen (Kenngröße LBER) in den LDAT-Datensätzen neu festgelegt. Ist die Berechtigungsstufe LBER der i-ten zu verarbeitenden Datenzeile kleiner als die Berechtigungsstufe LBER des i-ten LDAT-Datensatzes der LDAT-Gruppe, wird dem Wert der Berechtigungsstufe LBER des i-ten LDAT-Datensatzes der Wert der Berechtigungsstufe LBER der i-ten zu verarbeitenden Datenzeile zugewiesen. Dieser Vorgang wird für alle LDAT-Datensätze der LDAT-Gruppe wiederholt. Im Anschluß daran wird die Nummer dieser LDAT-Gruppe zwischengespeichert (Schritt S66) und die Bearbeitung mit Schritt S74 in Figur 9 fortgesetzt.

In Figur 9 sind die Schritte S70 bis S80 als Fortsetzung des Flußdiagramms zur vierten Phase dargestellt. Im Schritt S70 werden aus den zu verarbeitenden Datenzeilen die LDAT-Datensätze einer neuen LDAT-Gruppe gebildet. Jeder LDAT-Datensatz innerhalb der neuen LDAT-Gruppe wird fortlaufend numeriert und die Nummer in die Kenngröße LWERT des LDAT-Datensatzes eingetragen. Für diese neue LDAT-Gruppe wird eine eindeutige Gruppennummer vergeben und dem Wert der Kenngröße LRTG der neu gebildeten LDAT-Datensätze zugewiesen. Diese Gruppennummer wird zwischengespeichert (Schritt S72), da sie bei der Generierung des LDPLN-Datensatzes benötigt wird.

Im Schritt S74 wird der zu dem Wählmuster LWN gehörende LDPLN-Datensatz gebildet. Dieser enthält dann die Kenngröße LWN, die Kenngröße LRTG, der die gespeicherte Nummer der LDAT-Gruppe zugewiesen wird, und die Kenngröße LBER mit der Berechtigungsstufe. Dieser Kenngröße LBER wird die niedrigste Berechtigungsstufe der zu verarbeitenden Datenzeilen zugewiesen. Anschließend werden die erzeugten LDAT-Datensätze gespeichert (Schritt S76). Ergibt die Abfrage S78, daß die Liste LWMLIST noch ein weiteres Wählmuster LWN enthält, wird zum Ablaufschritt S50 in Figur 8 gesprungen.

Schließlich werden im Verfahrensschritt S80 die erzeugten LDAT- und LDPLN-Datensätze in eine Steuerdatei T für die Nebenstellenanlage 10 geschrieben. Jeder LDAT-Datensatz wird mit dem Symbol "EINR-LDAT:" und jeder LDPLN-Datensatz mit "EINR-LDPLN:" gekennzeichnet. An das jeweilige Symbol schließt sich eine Liste mit den Kenngrößen LWM, LRTG und LBER an. Als Trennzeichen zwischen den Kenngrößen wird jeweils ein Komma benutzt. Ein Semikolon markiert das Ende der Datenzeile. Hinter der Datenzeile kann ein Kommentar eingefügt werden, der durch das Symbol "/*" kenntlich gemacht wird.

## Patentansprüche

1. Verfahren zum Konfigurieren einer Nebenstellenanlage (10),
bei dem ein Privatnetz (P) mehrere Nebenstellenanlagen enthält, die auch mit dem öffentlichen Telefonnetz verbunden sind,
jede Nebenstellenanlage (10) einen Rufnummernplan (R) enthält, der eine Vielzahl von Datenzeilen (zi) umfaßt, die Verbindungswege zwischen der Nebenstellenanlage (10) und einem Teilnehmer im öffentlichen Telefonnetz definieren,
jede Datenzeile (zi) mindestens ein Wählmuster (LWM) für den Verbindungsweg,
eine Telefongebühr-Kenngröße (TARIF), die einen Telefontarif festlegt, nach dem sich die Gebühren für ein Gespräch berechnen, das über den durch die Datenzeile (zi) definierten Verbindungsweg geführt wird,
eine Leitungs-Kenngröße (BUNUM), die eine Verbindungsleitung (16, 20, 22) von der Nebenstellenanlage (10) zu einer benachbarten Nebenstellenanlage (12, 14) des Privatnetzes (P) oder zum öffentlichen Telefonnetz (32) festlegt,
und eine Prioritätskennzahl (PRIO) enthält, mit der unter Datenzeilen (zi) mit gleichem Wählmuster (LWM) und gleichem Wert der Telefongebühr-Kenngröße (TARIF) eine Rangfolge festgelegt wird,
und bei dem in einem iteraktiven Datenverarbeitungsprozeß folgende Schritte ausgeführt werden:
a1) es wird für eine Datenzeile (zi) festgestellt, ob eine weitere Datenzeile mit gleichem Wählmuster (LWM) und gleicher Leitungs-Kenngröße (BUNUM) existiert,
a2) wenn dies nicht zutrifft, wird zum Schritt a5) verzweigt,
a3) wenn dies zutrifft, wird bei unterschiedlichem Wert der Telefongebühr-Kenngröße (TARIF) diejenige Datenzeile mit höherem Wert der Telefongebühr-Kenngröße (TARIF) aus dem Rufnummernplan (R) entfernt und zum Schritt a5) verzweigt,
a4) andernfalls wird bei gleicher Telefongebühr-Kenngröße (TARIF) diejenige Datenzeile mit höherem Wert der Prioritätskennzahl (PRIO) aus dem Rufnummernplan (R) entfernt,
a5) es wird die nächste Datenzeile geholt und zum Schritt a1) verzweigt.

2. Verfahren nach Anspruch 1,
**dadurch gekennzeichnet,**
daß in dem iterativen Datenverarbeitungsprozeß zusätzlich folgende Schritte ausgeführt werden:
b1) es wird für eine aktuelle Datenzeile (zi) festgestellt, ob eine weitere Datenzeile (zi) mit gleichem Wählmuster (LWM) und niedrigerem Wert der Prioritätskennzahl (PRIO) existiert,
b2) wenn dies nicht zutrifft, wird zum Schritt b4) verzweigt,
b3) wenn dies zutrifft, wird diese weitere Datenzeile als aktuelle Datenzeile verwendet und zum Schritt b1) verzweigt,
b4) es wird für die aktuelle Datenzeile festgestellt, ob im Rufnummernplan (R) eine weitere Datenzeile mit gleichem Wählmuster (LWM), gleichem Wert der Prioritätskennzahl (PRIO) und einem höheren Wert der Telefongebühr-Kenngröße (TARIF) existiert,
b5) wenn dies zutrifft, wird diese weitere Datenzeile als aktuelle Datenzeile verwendet und zum Schritt b4) verzweigt,
b6) wenn dies nicht zutrifft, wird für die aktuelle Datenzeile festgestellt, ob eine weitere Datenzeile mit gleichem Wählmuster (LWN), mit höherem Wert der Prioritätskennzahl (PRIO) und mit einem gleichem oder einem höheren Wert der Telefongebühr-Kenngröße (TARIF) existiert,
b7) wenn dies zutrifft, wird diese weitere Datenzeile aus dem Rufnummernplan (R) entfernt und zum Schritt b6) verzweigt,
b8) wenn dies nicht zutrifft, wird zum Schritt b1) verzweigt und als aktuelle Datenzeile die im Rufnummernplan (R) nächste Datenzeile verwendet.

3. Verfahren nach Anspruch 1 oder 2,
**dadurch gekennzeichnet,**
daß in dem iterativen Datenverarbeitungsprozeß zusätzlich folgende Schritte ausgeführt werden:
c1) es wird für eine aktuelle Datenzeile (zi) festgestellt, ob im Rufnummernplan (R) mindestens eine weitere Datenzeile mit gleichem Wählmuster (LWM) existiert,
c2) wenn dies nicht zutrifft, wird zum Schritt c4) verzweigt,
c3) trifft dies zu, werden sämtliche Datenzeilen mit diesem Wählmuster (LWM) im Rufnummernplan (R) zu einem Datenbereich (F, G) zusammengefaßt und sortiert, wobei aufeinander folgende Datenzeilen aufsteigende Werte der Telefongebühr-Kenngröße (TARIF) haben und aufeinander folgende Datenzeilen mit gleichem Wert der Telefongebühr-Kenngröße (TARIF) aufsteigende Werte der Prioritätskennzahl (PRIO) haben.
c4) es wird zum Schritt c1) verzweigt und als aktuelle Datenzeile die nächste Datenzeile verwendet.

4. Verfahren nach Anspruch 3,
**dadurch gekennzeichnet,**
daß in dem iterativen Datenverarbeitungsprozeß zusätzlich folgende Schritte ausgeführt werden:
d1) es wird für einen aktuellen Datenbereich (F) geprüft, ob ein weiterer Datenbereich (G) mit gleicher Anzahl der Datenzeilen existiert,
d2) trifft dies nicht zu, wird zum Schritt d1) verzweigt und als aktueller Datenbereich der nächste Datenbereich mit anderem Wählmuster (LWM) verwendet,
d3) trifft dies zu, wird geprüft, ob die Werte der Leitungs-Kenngröße (BUNUM) aufeinander folgender Datenzeilen (zi) des aktuellen Datenbereiches (F) dieselbe Folge von Werten bilden wie die Werte der Leitungs-Kenngröße (BUNUM) aufeinander folgender Datenzeilen (zi) des weiteren Datenbereiches (G),
d4) trifft dies nicht zu, wird zum Schritt d1) verzweigt,
d5) trifft dies zu, werden entsprechend der Anzahl der Datenzeilen (zi) des aktuellen Datenbereiches (F) LDAT-Datensätze (D1 bis D3) angelegt, die eine LDAT-Gruppe bilden, wobei jeder LDAT-Datensatz (D1 bis D3) mindestens die Leitungs-Kenngröße (BUNUM) und eine Datenbereichs-Kenngröße (LRTG) enthält, die die LDAT-Gruppe kennzeichnet,
d6) es wird eine Gruppennummer für die LDAT-Gruppe bestimmt,
d7) der Leitungs-Kenngröße (BUNUM) des i-ten LDAT-Datensatzes (D1 bis D3) wird der Wert der Leitungs-Kenngröße (BUNUM) der i-ten Datenzeile des aktuellen Datenbereiches (F) zugewiesen und der Datenbereichs-Kenngröße (LRTG) des i-ten LDAT-Datensatzes (D1 bis D3) wird der Wert der Gruppennummer zugeordnet,
d8) es werden ein erster und ein zweiter LDPLN-Datensatz (D4, D5) angelegt, wobei jeder LDPLN-Datensatz (D4, D5) mindestens das Wählmuster (LWM) und die Datenbereichs-Kenngröße (LRTG) enthält,
d9) dem Wählmuster (LWM) des ersten LDPLN-Datensatzes (D4) wird der Wert des Wählmusters (LWM) einer Datenzeile des aktuellen Datenbereiches (F) und der Datenbereichs-Kenngröße (LRTG) des ersten LDPLN-Datensatzes (D4) wird der Wert der Gruppennummer der LDAT-Gruppe zugewiesen,
d10) dem Wählmuster (LWM) des zweiten LDPLN-Datensatzes (D5) wird der Wert des Wählmusters (LWM) einer Datenzeile des weiteren Datenbereiches (G) und der Datenbereichs-Kenngröße (LRTG) des zweiten LDPLN-Datensatzes (D5) wird der Wert der Gruppennummer zugewiesen.
d11) es wird zum Schritt d1) verzweigt und als aktueller Datenbereich der nächste Datenbereich mit anderem Wählmuster (LWM) verwendet.

5. Verfahren zum Konfigurieren einer Nebenstellenanlage (10),
bei dem ein Privatnetz (P) mehrere Nebenstellenanlagen enthält, die auch mit dem öffentlichen Telefonnetz verbunden sind,
jede Nebenstellenanlage (10) einen Rufnummernplan (R) enthält, der eine Vielzahl von Datenzeilen (zi) umfaßt, die Verbindungswege zwischen der Nebenstellenanlage (10) und einem Teilnehmer im öffentlichen Telefonnetz definieren,
jede Datenzeile (zi) mindestens ein Wählmuster (LWM) für den Verbindungsweg,
eine Telefongebühr-Kenngröße (TARIF), die einen Telefontarif festlegt, nach dem sich die Gebühren für ein Gespräch berechnen, das über den durch die Datenzeile (zi) definierten Verbindungsweg geführt wird,
eine Leitungs-Kenngröße (BUNUM), die eine Verbindungsleitung (16, 20, 22) von der Nebenstellenanlage (10) zu einer benachbarten Nebenstellenanlage (12, 14) des Privatnetzes (P) oder zum öffentlichen Telefonnetz (32) festlegt,
und eine Prioritätskennzahl (PRIO) enthält, mit der unter Datenzeilen (zi) mit gleichem Wählmuster (LWN) und gleichem Wert der Telefongebühr-Kenngröße (TARIF) eine Rangfolge festgelegt wird,
und bei dem in einem iterativen Datenverarbeitungsprozeß folgende Schritte ausgeführt werden:
e1) es wird für eine aktuelle Datenzeile (zi) festgestellt, ob eine weitere Datenzeile (zi) mit gleichem Wählmuster (LWM) und niedrigerem Wert der Prioritätskennzahl (PRIO) existiert,
e2) wenn dies nicht zutrifft, wird zum Schritt e4) verzweigt,
e3) wenn dies zutrifft, wird diese weitere Datenzeile als aktuelle Datenzeile verwendet und zum Schritt e1) verzweigt,
e4) es wird für die aktuelle Datenzeile festgestellt, ob im Rufnummernplan (R) eine weitere Datenzeile mit gleichem Wählmuster (LWM), gleichem Wert der Prioritätskennzahl (PRIO) und einem höheren Wert der Telefongebühr-Kenngröße (TARIF) existiert,
e5) wenn dies zutrifft, wird diese weitere Datenzeile als aktuelle Datenzeile verwendet und zum Schritt e4) verzweigt,
e6) wenn dies nicht zutrifft, wird für die aktuelle Datenzeile festgestellt, ob eine weitere Datenzeile mit gleichem Wählmuster (LWM), mit höherem Wert der Prioritätskennzahl (PRIO) und mit einem gleichem oder einem höheren Wert der Telefongebühr-Kenngröße (TARIF) existiert,
e7) wenn dies zutrifft, wird diese weitere Datenzeile aus dem Rufnummernplan (R) entfernt und zum Schritt e6) verzweigt,
e8) wenn dies nicht zutrifft wird zum Schritt e1) verzweigt und als aktuelle Datenzeile die im Rufnummernplan (R) nächste Datenzeile verwendet.

6. Verfahren nach Anspruch 5,
**dadurch gekennzeichnet,**
daß in dem iterativen Datenverarbeitungsprozeß folgende Schritte zusätzlich ausgeführt werden:
f1) es wird für eine aktuelle Datenzeile (zi) festgestellt, ob eine weitere Datenzeile mit gleichem Wählmuster (LWM) und gleicher Leitungs-Kenngröße (BUNUM) existiert,
f2) wenn dies nicht zutrifft, wird zum Schritt f5) verzweigt,
f3) wenn dies zutrifft, wird bei unterschiedlichem Wert der Telefongebühr-Kenngröße (TARIF) diejenige Datenzeile mit höherem Wert der Telefongebühr-Kenngröße (TARIF) aus dem Rufnummernplan (R) entfernt und zum Schritt f5) verzweigt,
f4) andernfalls wird bei gleicher Telefongebühr-Kenngröße (TARIF) diejenige Datenzeile mit höherem Wert der Prioritätskennzahl (PRIO) aus dem Rufnummernplan (R) entfernt,
f5) es wird zum Schritt f1) verzweigt und als aktuelle Datenzeile die nächste Datenzeile verwendet.

7. Verfahren nach Anspruch 5 oder 6,
**dadurch gekennzeichnet,**
daß in dem iterativen Datenverarbeitungsprozeß zusätzlich folgende Schritte ausgeführt werden:
g1) es wird für eine aktuelle Datenzeile (zi) festgestellt, ob im Rufnummernplan (R) mindestens eine weitere Datenzeile mit gleichem Wählmuster (LWM) existiert,
g2) wenn dies nicht zutrifft, wird zum Schritt g4) verzweigt,
g3) trifft dies zu, werden sämtliche Datenzeilen mit diesem Wählmuster (LWM) im Rufnummernplan (R) zu einem Datenbereich (F, G) zusammengefaßt und sortiert, wobei aufeinander folgende Datenzeilen aufsteigende Werte der Telefongebühr-Kenngröße (TARIF) haben und aufeinander folgende Datenzeilen mit gleichem Wert der Telefongebühr-Kenngröße (TARIF) aufsteigende Werte der Prioritätskennzahl (PRIO) haben.
g4) es wird zum Schritt g1) verzweigt und als aktuelle Datenzeile die nächste Datenzeile verwendet.

8. Verfahren nach einem der Ansprüche 3, 4 oder 7,
**dadurch gekennzeichnet,**
daß nach Bearbeitung der Datenzeilen (zi) gemäß den Schritten c1) bis c4) oder nach Bearbeitung der Datenzeilen (zi) gemäß den Schritten g1) bis g4) die Telefongebühr-Kenngröße (TARIF) aus den Datenzeilen (zi) entfernt wird.

9. Verfahren nach einem der Ansprüche 3, 4, 7 oder 8,
**dadurch gekennzeichnet,**
daß nach Bearbeitung der Datenzeilen (zi) gemäß den Schritten c1) bis c4) oder nach Bearbeitung der Datenzeilen (zi) gemäß den Schritten g1) bis g4) die Prioritätskennzahl (PRIO) aus den Datenzeilen (zi) entfernt wird.

10. Verfahren nach einem der vorhergehenden Ansprüche,
**dadurch gekennzeichnet,**
daß die Datenzeilen (zi) des Rufnummernplans (R) aus einer Datei gelesen werden.

11. Verfahren nach einem der vorhergehenden Ansprüche 1 bis 3,
**dadurch gekennzeichnet,**
daß im Schritt a1) des iterativen Datenverarbeitungsprozesses die bereits eingelesenen Datenzeilen (zi) nach einer weiteren Datenzeile mit gleichem Wählmuster (LWM) und gleicher Leitungs-Kenngröße (BUNUM) durchsucht werden.

12. Verfahren nach einem der vorhergehenden Ansprüche,
**dadurch gekennzeichnet,**
daß nach Bearbeiten der Datenzeilen (zi) eine Steuerdatei (T) erzeugt wird, mit der die Nebenstellenanlage (10) so programmiert wird, daß Gespräche von einem Teilnehmer des Privatnetzes (P) zu einem Teilnehmer im öffentlichen Telefonnetz gemäß dem bearbeiteten Rufnummernplan (R) weitergeleitet werden.
